# EUROPEAN PATENT SPECIFICATION

(11) **EP 1 455 627 B1**
(45) Date of publication and mention of the grant of the patent: **20.01.2010**
(21) Application number: 02789139.9
(22) Date of filing: 11.10.2002
(51) Int. Cl.: A47L 9/16, B04C 5/08, B04C 5/13

(54) **VACUUM CLEANER**
STAUBSAUGER
ASPIRATEUR MENAGER

(30) Priority: 12.10.2001 TR 200102964; 11.10.2002 TR 200202352
(43) Date of publication of application: 15.09.2004
(73) Proprietor: Arçelik A.S., 34950 Istanbul (TR)
(72) Inventor: DURST, Franz LSTM Friedrich-Alexander Universität, 91058 Nürnberg (DE); SEKER, Deniz Arcelik Anonim Sirketi, Tuzla 34950 Istanbul (TR); TATAR, Hakan Arcelik Anonim Sirketi, Tuzla 34950 Istanbul (TR); FEDAI, Gokmen Arcelik Anonim Sirketi, Tuzla 34950 Istanbul (TR)
(86) International application number: PCT/TR2002/000064
(87) International publication number: WO 2003/030702

(56) References cited:
- EP-A- 0 728 435
- FR-A- 2 670 137
- GB-A- 2 367 774
- US-A- 4 826 515
- US-A1- 2001 042 283

## Description

The present invention relates to a vacuum cleaner in which cyclonic dust separators are used to perform the cleaning operation.

The cyclonic separators are the most commonly used devices for industrial separation/disintegration processes, for instance in petroleum and coal exploitation sectors due to their low costs and easy maintenance properties. The general operational principle of these separators is the separation of materials having different properties, from each other by means of the centrifugal force. They are used in the fields of separating the liquid-liquid, gas-liquid, gas-solid and solid-solid phases.

In the vacuum cleaners, by using said cyclonic separators, the requirement for using dust bags is eliminated whereby reductioh in the suction efficiency of the machine due to the filling of the dust bag, are avoided. By virtue of the geometry and structure of the cyclonic separator, dust is separated from the suction air in one or more cascades. (Said cascades are used to separate the dust particles of different dimensions, from the suction air).

In EP No. 0042723, an outer cyclone of a lower efficiency (to separate larger dust particles) and a higher efficiency inner cyclone (to separate fine dust particles) are disclosed.

In the EP No 0885585, a vacuum cleaner having three cyclonic separators arranged in cascade is disclosed.

A vacuum cleaner according to the preamble of claim 1 is known for example from E P-A-0 728 435.

The object of the present invention is to realize a vacuum cleaner which eliminates the need for the use of a dust bag by using serially arranged cyclonic separators and which avoids reduced suction efficiency.

The vacuum cleaner realized to attain the object of the invention has been illustrated in the attached drawings wherein;

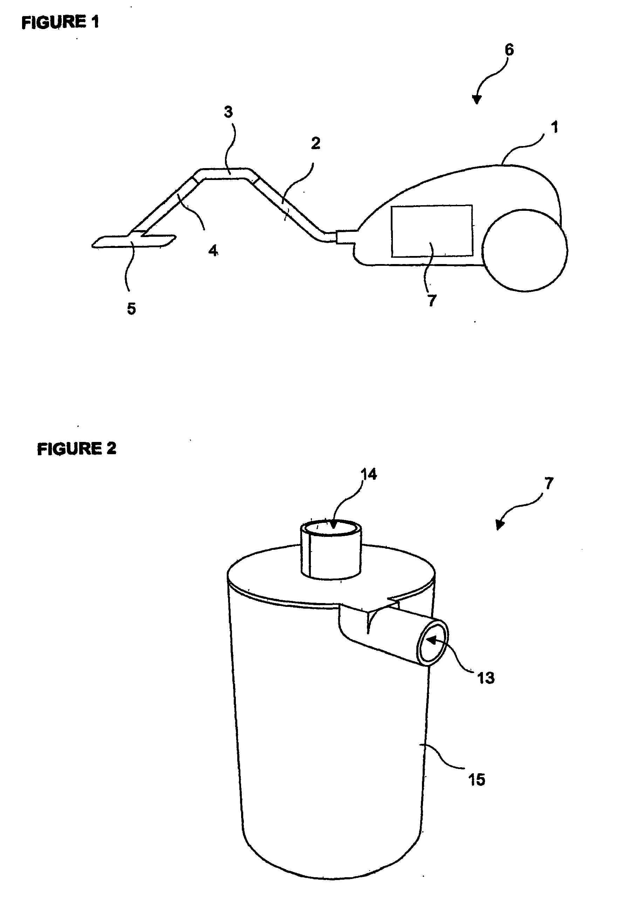

Figure 1, is the schematical view of a vacuum cleaner,
Figure 2, is the perspective view of the cyclonic separator,

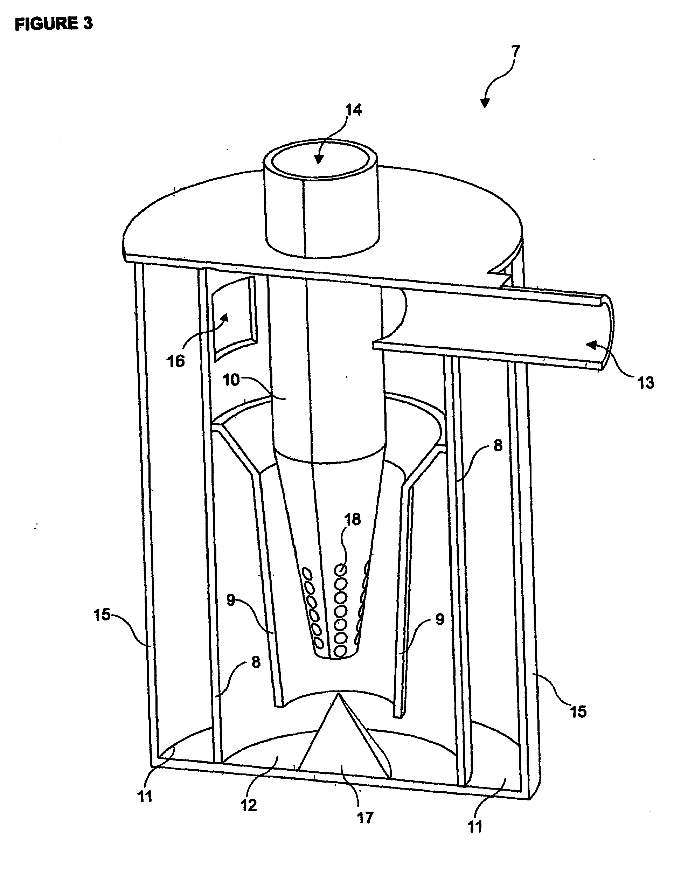

Figure 3, is the cross sectional view of the cyclonic separator;

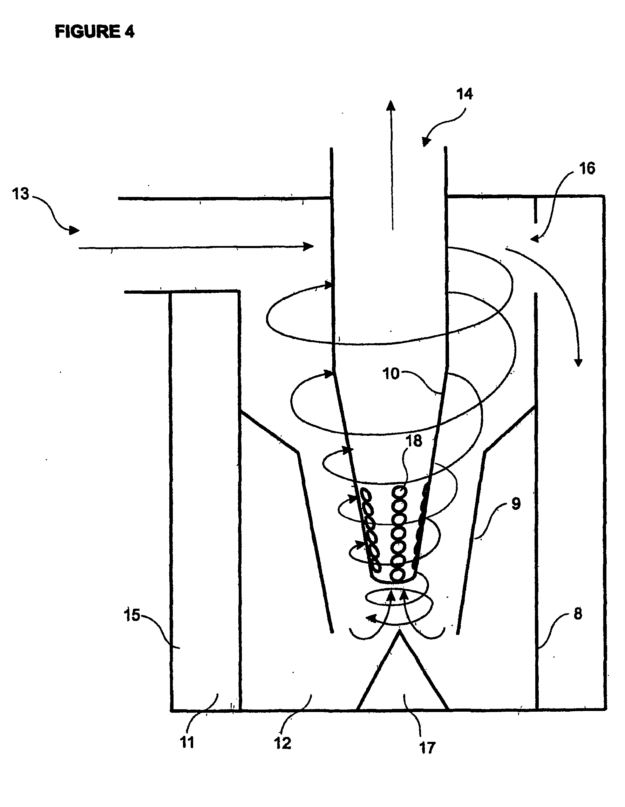

Figure 4, is the schematical view of the cyclonic separator.

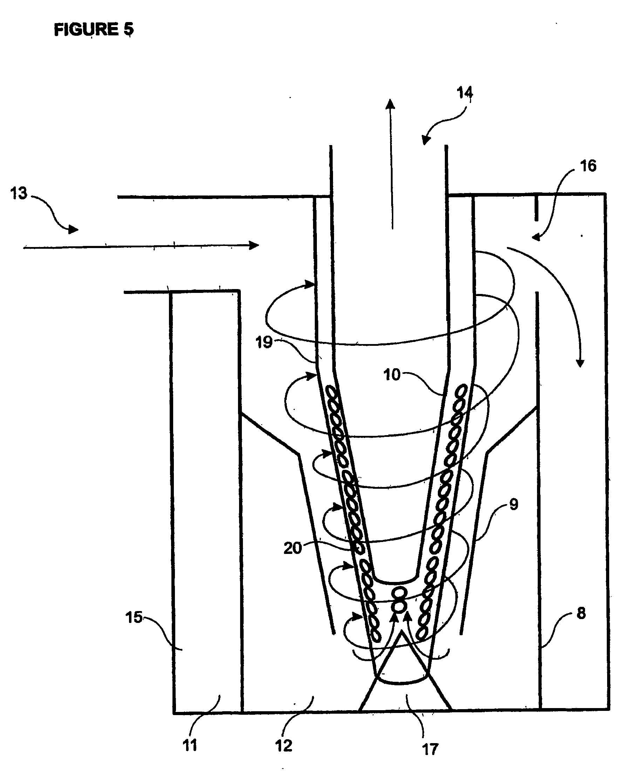

Figure 5, is the schematical view of the cyclonic separator comprising a trap piece.

The components shown in the drawings have been separately given reference numerals as follows:
1. Vacuum cleaner body
2. Hose
3. Handle
4. Extension pipe
5. Cleaner head
6. Vacuum cleaner
7. Cyclone unit
8. First cyclonic separator housing
9. Second cyclonic separator housing
10. Third cyclonic separator housing
11. First dust receiving and collection chamber
12. Second dust receiving and collection chamber
13. Air inlet
14. Air outlet
15. Outer casing
16. Window
17. Air-flow directing structure
18. Hole
19. Trap piece
20. Opening

The vacuum cleaner (6) according to the present invention, comprises a vacuum cleaner body(1); a hose (2) preferably made of plastic material, connected to said housing (1); a handle (3) connected to said hose (2) to facilitate the handling of the tube by the user; and an extension pipe (4) made of metal or rigid plastic material, connected to said handle (3); a cleaner head (5) connected to the end of said pipe (4) for cleaning the rugs and/or hard ground surfaces; and a cyclone unit (7) which operates to extract dirt and dust particles from the sucked-in air-flow therethrough.

Said cyclone unit (7) comprises an outer casing(15); an air inlet opening (13) located on the outer casing (15), whereby the sucked-in air enters; an air outlet opening (14); three cyclonic separator housings (8,9, and 10) to separate the dust, borne in the sucked-in air, that are arranged in a telescopic manner, coaxially in series; and chambers (11 and 12) for receiving and collecting the separated dust particles.

The outer casing (15) preferably has a cylindrical structure and the air inlet openings (13) is provided on the lateral surface of the outer casing(15) so that it provides vortex in the suction air, whereas the air outlet opening (14) is preferably positioned vertically on the upper surface of the outer casing(15). Said air inlet opening (13) opens to the first cyclonic separator housing (8) and is tangential to the lateral surface of the first cyclonic separator housing (8) in order to create a vortex,

Said first cyclonic separator housing (8) is placed in the outer casing(15), and is preferably of a cylindrical structure. As it is smaller in diameter than the diameter of the outer casing(15), a first dust receiving chamber (11) is formed between the outer casing(15) and the first cyclonic separator housing (8). At least one window (16) is provided above the first cyclonic separator housing (8), almost at the same level as the air inlet opening (14), facing said opening (14), which opens to the first dust receiving and collection chamber (11) thus providing the passage of the coarser dust particles to the first dust receiving chamber (11) by means of the centrifugal force.

The second cyclonic separator housing (9) is placed coaxialy in the first cyclonic separator housing (8). Said second cyclonic separator housing (9) has a conical structure with a smaller diameter at the bottom to increase the air flow velocity. The diameter of the conical structure first decreases (converges) considerably and then this narrowing rate is reduced and thus a structure with two cascades is formed.

The outlet port of the second cyclonic housing (9) opens to the second dust receiving chamber (12) and is positioned slightly above the outer casing(15). An air-flow directing structure (17) is placed in the second dust receiving chamber (12), just below the outlet port of the second cyclonic housing (9), which cuts down the velocity of the medium-sized dust particles hitting against it, in order to let them be collected in the second dust receiving chamber (12) and which directs the air flow to the third cyclonic separator housing (10).

The third cyclonic separator housing (10) is so placed in the first cyclone housing (8) that it is aligned on the same axis as the first cyclone housing (8) and the air flow-directing structure (17). The inlet opening of the third cyclonic separator housing (10) is positioned at the same level as the air flow directing structure (17), at a level above the outlet opening of the second cyclonic separator housing (9). Said third cyclonic separator housing (10) opens to the air outlet (14) and consists of a conical portion diverging from the inlet opening and a cylindrical portion coming after the conical portion. Said conical portion has a perforated structure consisting of one or more holes (18), that prevents the noise created due to the narrow crosssection and avoids the pressure drops.

When the vacuum cleaner is operated, the dust-laden air sucked-in through the cleaner head (5) is directed towards the cyclone unit (7). Air entrained tangentially into the inner wall of the first cyclonic separator housing (8) is subjected to centrifugal forces due to the cylindrical structure of the first cyclonic separator housing (8). The coarser particles in the air sucked in, are pushed towards the outer wall of the first cyclonic separator housing (8) by means of the said centrifugal forces and they pass through the window (16) under the effect of their own weights, to be collected in the first dust receiving chamber (11). The smaller dust particles swirl around in the first cyclonic separator housing (8) and reach the second cyclonic separator housing (9). Due to the conical structure that converges toward the bottom, of the second cyclonic separator housing (9), the velocity of the air flow is increased. The medium-sized particles are collected in the second dust receiving chamber (12), by means of the centrifugal force at the outlet of the second cyclonic separator housing (9) and of the air flow directing structure (17). Air, directed by the air flow directing structure (17), is elevated from the bottom of the second dust receiving chamber (12) and enters the third cyclone unit (10). In the third cyclonic separator housing (10), the pressure of the air increases as its speed decreases due to the conical structure of the portion that extends in a diverging manner from the inlet, and the fine dust particles contained in said housing fall down under the effect of the centrifugal force, they pass through the inlet opening of the third cyclonic separator housing (10) and are collected in the second dust receiving chamber (12). The purified air, freed of dust particles, leaves the cyclone unit (7) through the air outlet opening (14).

In another embodiment of the current invention, the cyclone unit (7) comprises a trap piece (19) that is placed within the first cyclonic separators housing (8), concentric with the third cyclonic separator housing (10) and wraps the third cyclonic separator housing (10). The form of the trap piece (19) is similar to the form of the third cyclonic separator housing (10). The trap piece (19) is composed of a cylindrical portion and a conical portion. The trap piece (19) lays between the top and bottom of the outer casing (15), and contacts the air flow directing structure (17).

The trap piece (19) comprises one or more than one openings (20) on the conical portion, for enabling the flow of air into the third cyclonic separators housing (10).

By using the cyclone unit (7), dust bags are no longer required in the vacuum cleaners and the drops in the suction efficiency occurring due to the fullness status of the dust bags are avoided.

## Claims

1. A vacuum cleaner comprising a cyclone unit (7) that includes an outer casing(15); an air inlet opening (13) located on the outer casing (15), whereby the sucked-in air enters; an air outlet (14); three cyclonic separator housings (8,9, and 10) to separate the dust borne in the sucked-in air, that are arranged in a telescopic manner, coaxially, in series wherein the air inlet opening (13) is provided on the lateral surface of the outer housing (15) so that it provides vortex in the suction air; **characterized by** a first cyclonic separator housing (8) of a preferably cylindrical structure placed in the outer casing(15), having a smaller diameter than the diameter of the outer casing(15); a second cylonic separator housing (9), placed coaxially in the first cyclonic separator housing (8) and having a conical structure with a smaller diameter at the bottom to increase the air flow velocity wherein its diameter first decreases (converges) considerably and then this narrowing rate is reduced and thus a structure with two cascades is formed; a third cyclonic separator housing (10) so placed in the first cyclone housing (8) that it is aligned on the same axis as the first cyclone housing (8) and comprising a conical portion diverging from the inlet opening and a cylindrical portion coming after the conical portion; wherein the air inlet opening (13) opens to the first cyclonic separator housing (8) and is tangential to the lateral surface of the first cyclonic separator housing (8); and at least one window (16) is provided on the first cyclonic separator housing (8), almost at the same level as the air inlet opening (13), facing said opening (13).

2. A vacuum cleaner (6) as defined in Claim 1, **characterized by** the cyclone unit (7) comprising a first dust receiving chamber (11) located between the outer casing(15) and the first cyclonic separator housing (8), the at least one window (16) opening to the first dust receiving and collection chamber (11) thus providing the passage of the coarser dust particles to the first dust receiving chamber (11) by means of the centrifugal force.

3. A vacuum cleaner (6) as defined in Claims 1 and 2, **characterized by** the cyclone unit (7) comprising a second dust receiving chamber (12) to which the outlet port of the second cyclonic housing (9) opens and an air flow directing structure (17) provided just below the air outlet opening of the second cyclonic housing (9), which cuts down the velocity of the medium sized dust particles hitting against it, in order to let them be collected in the second dust receiving chamber (12) and which directs the air flow to the third cyclonic separator housing (10).

4. A vacuum cleaner (6) as defined in Claims 1 to 3, **characterized by** the cyclone unit (7) comprising the third cyclonic separator housing (10) wherein, its inlet opening being positioned at the same level as the air flow directing structure (17), at a level above the outlet opening of the second cyclonic separator housing (9); that opens to the air outlet opening (14) and has a perforated structure consisting of one or more holes (18), that prevents the noise created due to the narrow cross section and avoids the pressure drops.

5. A vacuum cleaner (6) as defined in any one of the previous claims, **characterized by** the cyclone unit (7) comprising a trap piece (19) that is placed within the first cyclonic separator housing (8), concentric with the third cyclonic separator housing (10) and wraps the third cyclonic separator housing (10).

6. A vacuum cleaner (6) as defined in Claim 5, **characterized by** the cyclone unit (7) comprising the trap piece (19) that is composed of a cylindrical portion and a conical portion, that lays between the top and bottom of the outer casing (15), and contacts the air flow directing structure (17).

7. A vacuum cleaner (6) as defined in Claim 6, **characterized by** the cyclone unit (7) comprising the trap piece (19) that has one or more than one openings (20) on the conical portion, for enabling the flow of air into the third cyclonic separator housing (10).

## Patentansprüche

1. Staubsauger, umfassend eine Staubabscheidungseinheit (7), die ein Außengehäuse (15) aufweist; eine Lufteinlassöffnung (13), die am Außengehäuse (15) angeordnet ist, und durch die die angesaugte Luft eintritt; einen Luftauslass (14); drei Staubabscheidungsgehäuse (8, 9 und 10), die den Staub, der von der angesaugten Luft eingetragen wird, abscheiden, und die auseinanderziehbar koaxial einer Reihe angeordnet sind, wobei die Lufteinlassöffnung (13) an der Seitenfläche des Außengehäuses (15) vorgesehen ist, derart, dass sie in der Ansaugluft Wirbel erzeugt; **gekennzeichnet durch** ein erstes Staubabscheidungsgehäuse (8) mit einem vorzugsweise zylinderförmigen Aufbau, das im Außengehäuse (15) angeordnet ist, und das einen kleineren Durchmesser aufweist als das Außengehäuse (15); ein zweites Staubabscheidungsgehäuse (9), das koaxial im ersten Staubabscheidungsgehäuse (8) angeordnet ist, und das einen kegelförmigen Aufbau mit einem kleineren Durchmesser an der Unterseite aufweist, um die Luftströmungsgeschwindigkeit zu erhöhen, wobei sein Durchmesser zunächst stark abnimmt (konvergiert) und diese Verengungsrate dann reduziert wird, wodurch ein Aufbau mit zwei Kaskaden gebildet wird; ein drittes Staubabscheidungsgehäuse (10), das derart im ersten Staubabscheidungsgehäuse (8) angeordnet ist, dass es an derselben Achse wie das erste Staubabscheidungsgehäuse (8) ausgerichtet ist, und das einen kegelförmigen Abschnitt umfasst, der von der Einlassöffnung abzweigt, und einen zylinderförmigen Abschnitt, der nach dem kegelförmigen Abschnitt angeordnet ist; wobei die Lufteinlassöffnung (13) sich zum ersten Staubabscheidungsgehäuse (8) hin öffnet und tangential zur Seitenfläche des ersten Staubabscheidungsgehäuse (8) ist; und wenigstens ein Fenster (16) am ersten Staubabscheidungsgehäuse (8) nahezu auf der gleichen Höhe wie die Lufteinlassöffnung (13) vorgesehen ist, das der Öffnung (13) zugewandt ist.

2. Staubsauger (6) nach Anspruch 1, **dadurch gekennzeichnet, dass** die Staubabscheidungseinheit (7) eine erste Staubaufnahmekammer (11) umfasst, die zwischen dem Außengehäuse (15) und dem ersten Staubabscheidungsgehäuse (8) angeordnet ist, wobei sich wenigstens ein Fenster (16) zu der ersten Staubaufnahme- und -sammelkammer (11) hin öffnet und auf diese Weise aufgrund der Zentrifugalkraft das Durchlassen der gröberen Staubpartikel zur ersten Staubaufnahmekammer (11) vorsieht.

3. Staubsauger (6) nach den Ansprüchen 1 und 2, **dadurch gekennzeichnet, dass** die Staubabscheidungseinheit (7) eine zweite Staubaufnahmekammer (12) umfasst, zu der sich die Auslassmündung des zweiten Staubabscheidungsgehäuses (9) hin öffnet, und einen Luftstromlenkaufbau (17), der unmittelbar unter der Luftauslassöffnung des zweiten Staubabscheidungsgehäuses (9) vorgesehen ist, und der die Geschwindigkeit der mittelgroßen Staubpartikel reduziert, die auf ihn treffen, damit diese in der zweiten Staubaufnahmekammer (12) gesammelt werden, und der den Luftstrom zum dritten Staubabscheidungsgehäuse (10) lenkt.

4. Staubsauger (6) nach den Ansprüchen 1 bis 3, **dadurch gekennzeichnet, dass** bei dem dritten Staubabscheidungsgehäuse (10) der Staubabscheidungseinheit (7) die Einlassöffnung auf der gleichen Höhe angeordnet ist wie der Luftstromlenkaufbau (17), und zwar auf einer Höhe oberhalb der Auslassöffnung des zweiten Staubabscheidungsgehäuses (9); und dass sich das dritte Staubabscheidungsgehäuse (10) zu der Luftauslassöffnung (14) hin öffnet und eine perforierte Struktur aufweist, die aus einer oder mehreren Öffnungen (18) besteht, und die verhindert, dass aufgrund des geringen Querschnitts Geräusche erzeugt werden, und die Druckabfälle vermeidet.

5. Staubsauger (6) nach einem der vorangehenden Ansprüche, **dadurch gekennzeichnet, dass** die Staubabscheidungseinheit (7) ein Auffangelement (19) umfasst, das konzentrisch mit dem dritten Staubabscheidungsgehäuse (10) in dem ersten Staubabscheidungsgehäuse (8) angeordnet ist, und das um das dritte Staubabscheidungsgehäuse (10) gewickelt ist.

6. Staubsauger (6) nach Anspruch 5, **dadurch gekennzeichnet, dass** das Auffangelement (19) der Staubabscheidungseinheit (7) aus einen zylinderförmigen Abschnitt und einen kegelförmigen Abschnitt besteht, und zwischen der Oberseite und der Unterseite des Außengehäuses (15) angeordnet ist, und in Kontakt mit dem Luftstromlenkaufbau (17) steht.

7. Staubsauger (6) nach Anspruch 6, **dadurch gekennzeichnet, dass** das Auffangelement (19) der Staubabscheidungseinheit (7) eine oder mehrere Öffnungen (20) am kegelförmigen Abschnitt aufweist, um das Strömen der Luft in das dritte Staubabscheidungsgehäuse (10) zu ermöglichen.

## Revendications

1. Un aspirateur comprenant une unité de cyclone (7) qui comprend un boîtier extérieur (15) ; une ouverture d'entrée d'air (13) située sur le boîtier extérieur (15), par laquelle l'air aspiré entre ; une sortie d'air (14) ; trois séparateurs cyclones (8, 9 et 10) à séparer les poussières portées dans l'air aspiré, qui sont disposés de manière télescopique, coaxiallement, en série où l'ouverture d'entrée d'air (13) est disposée sur la surface latérale du boîtier extérieur (15) de sorte qu'il permet le tourbillon dans l'air d'aspiration ; **caractérisé par** un premier séparateur cyclone (8) préférablement d'une structure cylindrique situé dans le boîtier extérieur (15), ayant un diamètre plus petit que le diamètre du boîtier extérieur (15) ; un second séparateur cyclone (9), situé coaxiallement dans le premier séparateur cyclone (8) et ayant une structure conique avec un diamètre plus petit dans le bas pour augmenter la vélocité d'écoulement d'air où le diamètre de celui-ci diminue (converge) d'abord et ensuite ce taux de rétrécissement est réduit et donc une structure en deux cascades est formée ; un troisième séparateur cyclone (10) situé dans le premier séparateur cyclone (8) de sorte qu'il est aligné sur le même axe comme le premier séparateur cyclone (8) et comprenant une partie conique divergeant de l'ouverture d'entrée et une partie cylindrique venant après la partie conique ; où l'ouverture d'entrée d'air (13) s'ouvre au premier séparateur cyclone (8) et est tangentiel à la surface latérale du premier séparateur cyclone (8) ; et au moins une fenêtre (16) est disposée sur le premier séparateur cyclone (8), presque au même niveau que l'ouverture d'entrée d'air (13), en face de ladite ouverture (13).

2. Un aspirateur (6) selon la Revendication 1, **caractérisé par** l'unité de cyclone (7) comprenant une première chambre de réception de poussière (11) situé entre le boîtier extérieur (15) et le premier séparateur cyclone (8), au moins une fenêtre (16) s'ouvrant à la première chambre de réception et collection de poussière (11) donc permettant le passage des particules de poussière plus grossières à la première chambre de réception de poussière (11) au moyen de la force centrifuge.

3. Un aspirateur (6) selon les revendications 1 et 2, **caractérisé par** l'unité de cyclone (7) comprenant une seconde chambre de réception de poussière (12) à laquelle ouverture de sortie du second séparateur cyclone (9) s'ouvre et une structure à diriger l'écoulement d'air (17) située juste sous l'ouverture de sortie d'air du second séparateur cyclone (9), qui réduit la vitesse des particules de poussière en taille moyenne frappant contre elle, afin de les laisser être recueillies dans la seconde chambre de réception de poussière (12) et qui dirige l'écoulement d'air au troisième séparateur cyclone (10).

4. Un aspirateur (6) selon l'une quelconque des revendications de 1 à 3, **caractérisé par** l'unité de cyclone (7) comprenant un troisième séparateur cyclone (10) où, son ouverture d'entrée positionnée au même niveau que la structure à diriger l'écoulement d'air (17), à un niveau supérieur à l'ouverture de sortie du second séparateur cyclone (9) ; qui s'ouvre à l'ouverture de sortie d'air (14) et a une structure perforée ayant un ou plusieurs trous (18), qui empêche le bruit créé à cause de la section transversale étroite et évite les chutes de pression.

5. Un aspirateur (6) selon l'une quelconque des revendications précédentes, **caractérisé par** l'unité de cyclone (7) comprenant une pièce de piège (19) qui est située dans le premier séparateur cyclone (8), concentrique au troisième séparateur cyclone (10) et enveloppe le troisième séparateur cyclone (10).

6. Un aspirateur (6) selon la Revendication 5, **caractérisé par** l'unité de cyclone (7) comprenant la pièce de piège (19) qui est composée d'une partie cylindrique et une partie conique, qui se trouve entre le haut et le bas du boîtier extérieur (15), et touche la structure à diriger l'écoulement d'air (17).

7. Un aspirateur (6) selon la Revendication 6, **caractérisé par** l'unité de cyclone (7) comprenant la pièce de piège (19) ayant une ou plusieurs ouvertures (20) sur la partie conique, pour permettre l'écoulement d'air dans le troisième séparateur cyclone (10).
